(19) Europäisches Patentamt
European Patent Office
Office européen des brevets

(11) **EP 2 775 206 A1**

(12) **DEMANDE DE BREVET EUROPEEN**

(43) Date de publication:
**10.09.2014 Bulletin 2014/37**

(51) Int Cl.:
*F23N 3/00* *(2006.01)* *F24H 1/08* *(2006.01)*
*F24H 9/00* *(2006.01)* *F24H 3/06* *(2006.01)*
*F24H 9/18* *(2006.01)* *F24H 9/20* *(2006.01)*
*G05D 23/00* *(2006.01)*

(21) Numéro de dépôt: **14157502.7**

(22) Date de dépôt: **03.03.2014**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **06.03.2013 FR 1351983**

(71) Demandeur: **Yahtec**
**77100 Meaux (FR)**

(72) Inventeur: **Cazard, Yves**
**77600 St Jean les Deux Jumeaux (FR)**

(74) Mandataire: **Rhein, Alain**
**Cabinet Bleger-Rhein-Poupon**
**17, Rue de la Forêt**
**67550 Vendenheim (FR)**

(54) **Aérotherme à gaz**

(57)     La présente invention est relative à un aérotherme à gaz comportant un brûleur à gaz apte à effectuer un pré-mélange entre un gaz comburant et un gaz combustible, ledit brûleur à gaz réchauffant un fluide caloporteur circulant dans un premier échangeur de chaleur communiquant avec un second échangeur de chaleur par l'intermédiaire d'une pompe permettant le transfert dudit fluide caloporteur depuis ledit premier échangeur vers le second échangeur et inversement, ledit second échangeur étant traversé par de l'air soufflé ou aspiré par un ventilateur.

L'aérotherme selon l'invention est caractérisé par le fait que brûleur à gaz comporte des moyens aptes à ajuster en permanence la vitesse du ventilateur du brûleur pour réguler la puissance dudit brûleur.

EP 2 775 206 A1

**Description**

La présente invention concerne le domaine des dispositifs destinés à permettre le chauffage d'un volume.

L'invention concerne plus particulièrement un aérotherme à gaz destiné notamment à réchauffer un local industriel ou commercial.

Traditionnellement, les aérothermes connus de l'état de la technique sont composés d'une source de chaleur. Typiquement, dans les aérothermes à gaz, cette source de chaleur consiste en un brûleur à gaz.

Les aérothermes classiques comportent également au moins un échangeur de chaleur, par exemple un échangeur à condensation. Celui-ci permet de récupérer l'énergie qui est contenue dans la vapeur d'eau des gaz de combustion. Dans cet échangeur de chaleur à condensation circule un fluide caloporteur.

Enfin, les aérothermes traditionnels comportent encore un ventilateur permettant de souffler l'air chaud au niveau du local à réchauffer.

Lors du fonctionnement de l'aérotherme à gaz, le brûleur à gaz permet un réchauffement du fluide caloporteur circulant dans l'échangeur de chaleur. Cela entraine également un réchauffement de l'air environnant, par contact de cet air avec les parois chaudes de l'échangeur de chaleur. Cet air réchauffé est alors soufflé par le ventilateur pour entrainer une élévation de la température du local dans lequel est disposé l'aérotherme.

Généralement, un aérotherme gaz est commandé par un thermostat qui permet un enclenchement du brûleur en fonctions des besoins de chauffage du local.

Il existe différents types de brûleurs mis en oeuvre dans les aérothermes à gaz.

Ainsi, on connait notamment des brûleurs atmosphériques sans ventilateur et dans lesquels l'air nécessaire à la combustion est aspiré par la simple ascension des gaz brûlés. Un autre type de brûleur est dit « à air soufflé » ; dans cet appareil, l'apport de l'air comburant s'effectue au moyen d'un ventilateur.

Il est également connu de l'état de la technique des brûleurs à pré-mélange, dans lesquels ledit brûleur est alimenté par un mélange de gaz comburant et de gaz combustible. Cependant, dans le cas des aérothermes à gaz équipés de ce type de brûleurs à pré-mélange, la configuration de l'évacuation des produits de combustion et la longueur de celle-ci peuvent occasionner une augmentation ou une diminution de la puissance du brûleur. En effet, traditionnellement, la puissance maximale du brûleur est définie par une vitesse prédéfinie de ce brûleur ; cependant, les pertes de charges sont susceptibles de modifier le débit d'air de combustion et, donc, la puissance du brûleur. Ces modifications du débit d'air peuvent alors engendrer, soit un manque de puissance, soit une détérioration du foyer échangeur.

On connait, en particulier par le document de brevet US 4 135 487 un aérotherme à gaz dans lequel un premier échangeur de chaleur est traversé par un fluide caloporteur, lequel est ensuite transféré par une pompe vers un second échangeur de chaleur, distant du premier, permettant ainsi un échange chaleur/air soufflé de sorte, soit à chauffer une pièce, soit à la refroidir par évaporation. Il comporte également un moyen de contrôle qui permet le maintien d'un ratio air-fuel optimal, par un ajustement de l'ouverture des conduits d'alimentation en air et en gaz combustible. Pour autant, cette solution ne permet pas de répondre de manière satisfaisante au problème posé.

De même on connait par le document US 4 297 987 un échangeur de chaleur dans lequel un mélange combustible-air est acheminé par un ventilateur au brûleur. Il est indiqué que la quantité d'air apportée au brûleur est prédéterminée par l'intermédiaire d'ouverture déformable pour alimenter en quantité prédéterminée en air le brûleur.

Dans un autre document US 2008/0216771, il est fait référence à un système de contrôle pour un système de chauffage réglable, ledit système de contrôle consistant en des sondes de mesure de la température externe et interne de l'eau, ainsi que de la température des gaz d'échappement. Là encore, ce système de contrôle s'avère très peu satisfaisante.

L'invention offre la possibilité de pallier les divers inconvénients de l'état de la technique en proposant un aérotherme à gaz, équipé d'un brûleur à pré-mélange, incorporant un dispositif particulier, appelé « système RPC », qui permet à l'aérotherme d'auto-adapter la puissance du brûleur à pré-mélange et, ce, quel que soit la longueur ou la configuration des conduits d'évacuation des produits de combustion.

A cet effet, la présente invention concerne un aérotherme à gaz comportant un brûleur à gaz apte à effectuer un pré-mélange entre un gaz comburant et un gaz combustible, ledit brûleur à gaz réchauffant un fluide caloporteur circulant dans un premier échangeur de chaleur communiquant avec un second échangeur de chaleur par l'intermédiaire d'une pompe permettant le transfert dudit fluide caloporteur depuis ledit premier échangeur vers le second échangeur et inversement, ledit second échangeur étant traversé par de l'air soufflé ou aspiré par un ventilateur, ledit aérotherme à gaz étant caractérisé en ce que le brûleur à gaz comporte des moyens aptes à ajuster en permanence la vitesse du ventilateur du brûleur pour réguler la puissance dudit brûleur, ces moyens consistant en un dispositif comportant au moins deux sondes de mesure de la température du fluide caloporteur, la première sonde permettant une mesure de ladite température de départ du fluide caloporteur dans le premier échangeur de chaleur et la seconde sonde permettant une mesure de la température de retour du fluide caloporteur dans le premier échangeur de chaleur, ledit dispositif comportant encore un module de calcul de la puissance effective du couple brûleur à gaz/échangeur de chaleur, un module de comparaison de la puissance effective à une puissance de référence et un module de régulation de la vitesse du ventilateur du brûleur, ledit module de calcul appliquant, pour déterminer la puissance effective

(Peff) du couple brûleur à gaz/échangeur de chaleur, la formule mathématique suivante:

$$\texttt{(T°C départ - T°C retour)*D = Peff}$$

où :

- T°C départ correspond à la température de départ du fluide caloporteur dans le premier échangeur de chaleur ;
- T°C retour correspond à la température de retour du fluide caloporteur dans le premier échangeur de chaleur ;
- D correspond au débit du fluide caloporteur dans les premier et second échangeurs de chaleur.

La présente invention comporte de nombreux avantages. D'une part, le dispositif de calcul de la puissance permet un ajustement en temps réel de la vitesse du ventilateur du brûleur afin d'ajuster cette puissance. Cela permet une adaptation optimale du brûleur en fonction des besoins de celui-ci, sans risque de surchauffe ou de détérioration de la chaudière.

Plus particulièrement, la présente invention concerne un aérotherme dont la source de chaleur consiste en un brûleur à gaz. L'aérotherme selon l'invention est destiné notamment à permettre de réchauffer des locaux industriels ou commerciaux.

De façon essentielle, l'aérotherme selon l'invention comporte :

- un brûleur à gaz à pré-mélange, c'est-à-dire qu'il comporte des moyens d'alimentation d'une part en gaz comburant, et d'autre part en gaz combustible ; le comburant est généralement le dioxygène de l'air ;
- un premier échangeur de chaleur dans lequel circule un fluide caloporteur qui se réchauffe au contact de la chaleur produite par ledit brûleur ;
- un second échangeur de chaleur ;
- une pompe permettant le transfert du fluide caloporteur depuis le premier échangeur vers le second échangeur et inversement ;
- un ventilateur soufflant ou aspirant de l'air qui va traverser le second échangeur de chaleur pour réchauffer le local ; ce ventilateur peut également être désigné sous les termes « ventilateur du brûleur ».

De façon avantageuse, l'aérotherme selon l'invention se présente sous la forme d'un ensemble monobloc intégrant l'ensemble des composants listés ci-dessus, facilitant ainsi le transport et l'installation de l'aérotherme.

Préférentiellement, le premier échangeur de chaleur est un échangeur dit « à condensation ». Sur un tel échangeur, traversé par les fumées chaudes produites par la combustion des gaz, se condense la vapeur d'eau contenue dans lesdites fumées. L'échangeur récupère alors la chaleur qui réchauffe le fluide caloporteur circulant dans celui-ci.

De façon particulièrement intéressante, le brûleur à gaz de l'aérotherme selon l'invention comporte des moyens aptes à ajuster en permanence la vitesse du ventilateur du brûleur pour réguler la puissance de ce brûleur.

De tels moyens permettent avantageusement une auto-adaptation de la puissance du brûleur en fonction de ses besoins.

En effet, les aérothermes existants comportent des moyens d'évacuation des produits de combustion qui sont susceptibles de varier, et notamment en longueur. De plus, différents types de moyen d'évacuation des produits de combustion existent. En fonction de leur longueur et leur configuration, la puissance que le brûleur doit développer peut, soit augmenter, soit diminuer. De plus, des pertes de charges au niveau du débit de gaz de combustion sont également susceptibles de modifier la puissance. En conséquence, pour avoir une puissance constante au niveau du brûleur, il convient de l'ajuster en permanence.

Pour cela, de façon préférentielle, les moyens du brûleur à gaz qui sont aptes à ajuster la vitesse du ventilateur du brûleur consistent en un dispositif, appelé « système RPC », qui permet dans un premier temps de calculer la puissance effective du couple brûleur à gaz/échangeur de chaleur, puis de comparer cette puissance effective à une puissance de référence et enfin d'ajuster la vitesse du ventilateur du brûleur en fonction du résultat obtenu.

Pour ce faire, le dispositif dit « RPC » comporte avantageusement au moins deux sondes de mesure de la température du fluide caloporteur.

La première sonde permet une mesure de la température de départ du fluide caloporteur dans le premier échangeur de chaleur, c'est-à-dire lorsque celui-ci a été réchauffé par la chaleur dégagée par le brûleur à gaz.

La seconde sonde du dispositif permet avantageusement une mesure de la température de retour du fluide caloporteur dans le premier échangeur de chaleur, c'est-à-dire lorsque le fluide caloporteur a cédé ses calories à l'air soufflé ou aspiré par le ventilateur et que ledit fluide est réinjecté dans le premier échangeur de chaleur par la pompe.

Le dispositif dit « RPC » intégré à l'aérotherme selon l'invention comporte encore un module de calcul de la puissance effective du couple brûleur à gaz/échangeur de chaleur.

Préférentiellement, pour déterminer la puissance effective ($P_{eff}$) du couple brûleur à gaz/échangeur de chaleur, ledit module calcule dans un premier temps la différence entre la température de départ du fluide caloporteur dans le premier échangeur de chaleur (T°C départ) et la température de retour dudit fluide dans le premier échangeur de chaleur (T°C retour). Ensuite, le résultat de cette différence est multiplié par le débit du fluide caloporteur dans les échangeurs (D).

En d'autres termes, la formule mathématique permettant le calcul de la puissance effective est la suivante :

$$\texttt{(T°C départ − T°C retour)*D = P}_{\texttt{eff}}$$

Le dispositif dit « RPC » comporte encore avantageusement un module de comparaison de la puissance effective $P_{eff}$ à une puissance de référence $P_{ref}$. Dans le cas où $P_{eff}$ est différente de $P_{ref}$, la puissance est régulée par l'intermédiaire d'un module de régulation de la vitesse du ventilateur du brûleur.

Plus particulièrement, ce module de régulation permet d'augmenter ou de diminuer la vitesse du ventilateur du brûleur, de sorte à augmenter ou diminuer la puissance dudit brûleur à gaz, ramenant celle-ci à la puissance de référence pour éviter soit une détérioration de l'échangeur de chaleur, soit une puissance insuffisante pour chauffer le local.

## Revendications

**1.** Aérotherme à gaz comportant un brûleur à gaz apte à effectuer un pré-mélange entre un gaz comburant et un gaz combustible, ledit brûleur à gaz réchauffant un fluide caloporteur circulant dans un premier échangeur de chaleur communiquant avec un second échangeur de chaleur par l'intermédiaire d'une pompe permettant le transfert dudit fluide caloporteur depuis ledit premier échangeur vers le second échangeur et inversement, ledit second échangeur étant traversé par de l'air soufflé ou aspiré par un ventilateur, **caractérisé en ce que** le brûleur à gaz comporte des moyens aptes à ajuster en permanence la vitesse du ventilateur du brûleur pour réguler la puissance dudit brûleur, ces moyens consistant en un dispositif comportant au moins deux sondes de mesure de la température du fluide caloporteur, la première sonde permettant une mesure de ladite température de départ du fluide caloporteur dans le premier échangeur de chaleur et la seconde sonde permettant une mesure de la température de retour du fluide caloporteur dans le premier échangeur de chaleur, ledit dispositif comportant encore un module de calcul de la puissance effective du couple brûleur à gaz/échangeur de chaleur, un module de comparaison de la puissance effective à une puissance de référence et un module de régulation de la vitesse du ventilateur du brûleur, ledit module de calcul appliquant, pour déterminer la puissance effective ($P_{eff}$) du couple brûleur à gaz/échangeur de chaleur, la formule mathématique suivante:

$$\texttt{(T°C départ − T°C retour)*D = P}_{\texttt{eff}}$$

où :

- T°C départ correspond à la température de départ du fluide caloporteur dans le premier échangeur de chaleur ;
- T°C retour correspond à la température de retour du fluide caloporteur dans le premier échangeur de chaleur ;
- D correspond au débit du fluide caloporteur dans les premier et second échangeurs de chaleur.

Europäisches
Patentamt

European
Patent Office

Office européen
des brevets

**RAPPORT DE RECHERCHE EUROPEENNE**

Numéro de la demande

EP 14 15 7502

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 02/053972 A1 (HONEYWELL INT INC [US]) 11 juillet 2002 (2002-07-11) * page 22, ligne 11-18; figure 1 * ----- | 1 | INV. F23N3/00 F24H1/08 F24H9/00 |
| Y,D | US 4 135 487 A (HAYS HERBERT G) 23 janvier 1979 (1979-01-23) * colonne 4, ligne 31-61 - colonne 4, ligne 8; figures 1,10 * * colonne 9, ligne 48-65 * ----- | 1 | F24H3/06 F24H9/18 F24H9/20 G05D23/00 |
| Y,D | US 2008/216771 A1 (PAINE JOHN C [US]) 11 septembre 2008 (2008-09-11) * alinéas [0043] - [0047]; figures 1,2 * ----- | 1 | |
| Y | US 5 713 515 A (ADAMS CHARLES L [US] ET AL) 3 février 1998 (1998-02-03) * colonne 5, ligne 23-33; figure 1 * ----- | 1 | |

| DOMAINES TECHNIQUES RECHERCHES (IPC) |
|---|
| F24H F23N F23D G05D |

Le présent rapport a été établi pour toutes les revendications

| Lieu de la recherche | Date d'achèvement de la recherche | Examinateur |
|---|---|---|
| Munich | 10 avril 2014 | Degen, Marcello |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 15 7502

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-04-2014

| Document brevet cité au rapport de recherche | | Date de publication | Membre(s) de la famille de brevet(s) | | Date de publication |
|---|---|---|---|---|---|
| WO 02053972 | A1 | 11-07-2002 | US | 2002121556 A1 | 05-09-2002 |
| | | | WO | 02053972 A1 | 11-07-2002 |
| US 4135487 | A | 23-01-1979 | AUCUN | | |
| US 2008216771 | A1 | 11-09-2008 | US | 2008216771 A1 | 11-09-2008 |
| | | | US | 2009064944 A1 | 12-03-2009 |
| | | | US | 2010004786 A1 | 07-01-2010 |
| | | | US | 2012204816 A1 | 16-08-2012 |
| US 5713515 | A | 03-02-1998 | CA | 2191157 A1 | 06-06-1997 |
| | | | US | 5713515 A | 03-02-1998 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4135487 A
- US 4297987 A

- US 20080216771 A